# EUROPÄISCHE PATENTANMELDUNG

(11) **EP 4 342 730 A1**
(43) Veröffentlichungstag der Anmeldung: **27.03.2024**
(21) Anmeldenummer: 22196598.1
(22) Anmeldetag: 20.09.2022
(51) Int. Cl.: B60P 1/43

(54) **AUFFAHRHILFE FUR EINE VERLADEPLATTFORM**

(71) Anmelder: Wecon GmbH, 59387 Ascheberg (DE); TX Logistik AG, 53844 Troisdorf (DE)
(72) Erfinder: Holz, Klaus, 59394 Nordkirchen (DE)
(74) Vertreter: Kalkoff & Partner Patentanwälte mbB

(57) **Zusammenfassung**

Die Erfindung betrifft eine Auffahrhilfe mit einer Mehrzahl länglich ausgebildeter Auffahrfinger, welche jeweils eine Oberseite und eine Unterseite, sowie einen Verbindungsabschnitt aufweisen, über den die Auffahrfinger an einem Lagerelement drehbar gelagert sind. Um eine Auffahrhilfe bereitzustellen, welche flexibel einsetzbar, sicher und kostengünstig ist, ist vorgesehen, dass die Oberseiten der Auffahrfinger profiliert ausgebildet sind.

## Beschreibung

Die Erfindung betrifft eine Auffahrhilfe, sowie eine Verladeplattform mit einer Auffahrhilfe.

Auffahrhilfen finden sich bspw. an Lagermodulen, Transportplattformen, Abstellvorrichtungen oder auch Bühnen bzw. können an solchen mitunter modular angeordnet werden, um diese für Lastkraftwagen, Sattelauflieger und/oder Anhänger leichter befahrbar zu machen. Ein besonderer Verwendungsbereich der Erfindung sind mobile bzw. bewegliche Vorrichtungen die für Sattelauflieger leichter befahrbar gemacht werden sollen.

Aus dem Stand der Technik sind keilförmige Rampen bekannt, welche zur Überwindung einer Höhendifferenz genutzt werden. Rampen können derart abgelegt werden, dass sich anstelle einer unmittelbaren Kante über eine Weglänge ein linearer Anstieg ergibt. Solche Rampen können fest verbaut oder aber beweglich bzw. abnehmbar ausgebildet sein.

Ferner sind Auffahrschienen bekannt, mit welchen bspw. Minibagger, Motorräder o.ä. auf Anhänger aufgefahren werden können. Auffahrschienen sind dabei i.d.R. als stabile Metallbleche oder Metallgitter ausgebildet, welche ein Oberflächenrelief aufweisen können. Die Auffahrschienen können an Anhängern gelenkig gelagert sein, so dass diese bei Bedarf heruntergeklappt und ansonsten hochgeklappt werden können. Ferner sind Auffahrschienen bekannt, welche in sich faltbar ausgebildet sind.

Schließlich ist zur Auffahrt von Sattelaufliegern auf eine Transportplattform bspw. aus der WO 2016/141399 A1 bekannt, in einem Einfahrtsbereich ein Auffahrtselement vorzusehen, welches als keilförmige Rampe ausgebildet ist und einen integralen Teil der Transportplattform darstellt.

Auffahrtselemente der bereits bekannten Art sind unflexibel und leisten kaum einen Beitrag zur allgemeinen Sicherheit beim Verladen bzw. Auffahren von Sattelaufliegern o.ä. Weiter erhöhen entsprechende Auffahrtselemente die Dimensionen derjenigen Vorrichtungen welchen sie zugeordnet sind.

Der Erfindung liegt daher die Aufgabe zugrunde, eine Auffahrhilfe und eine Verladeplattform bereitzustellen, welche flexibel einsetzbar, sicher und kostengünstig sind.

Die Erfindung löst die Aufgabe durch eine Auffahrhilfe nach Anspruch 1 und eine Verladeplattform nach Anspruch 15. Die abhängigen Ansprüche beziehen sich auf vorteilhafte Ausführungsformen.

Erfindungsgemäß weist die Auffahrhilfe eine Mehrzahl länglich ausgebildeter Auffahrfinger auf, welche jeweils eine Oberseite und eine Unterseite, sowie einen Verbindungsabschnitt aufweisen, über den die Auffahrfinger an einem Lagerelement drehbar gelagert sind.

Im Rahmen der Erfindung kann unter einem Auffahrfinger ein längliches Element verstanden werden, welches nach Material und Stärke den Anforderungen entspricht, um regelmäßig mit dem üblichen Gewicht von Lastkraftwagen, Sattelaufliegern und/oder Anhängern belastet zu werden. Die Mehrzahl an Auffahrfingern kann dabei gedanklich gegenüber der zu erwartenden Last als Auffahrkörper verstanden werden, über dessen Teilstücke die durch die Last verursachte Gewichtskraft abgeleitet wird. Die Auffahrfinger können dabei nebeneinander angeordnet sein.

Unter einem Lagerelement kann im Rahmen der Erfindung ein Bauteil verstanden werden, welches einem daran wie vorgenannt angeordneten Auffahrfinger zumindest einen rotatorischen Freiheitsgrad gestattet, so dass der entsprechende Auffahrfinger daran drehbar gelagert ist. Solche Bauteile können Gelenke, Wellen, Achsen, Bolzen, Scharniere o.ä. sein.

Überdies sind die Oberseiten der Auffahrfinger erfindungsgemäß profiliert ausgebildet.

Im Rahmen der Erfindung kann unter profiliert eine lokale oder großflächige, haptisch tastbare topologische Abweichung der Oberfläche der Auffahrfinger von einer makroskopisch glatten Ebene verstanden werden.

Die erfindungsgemäße Auffahrhilfe weist eine erhöhte Flexibilität und Sicherheit im Gebrauch auf. Die Mehrzahl an Auffahrfingern ermöglicht eine Anpassung der Auffahrhilfe an verschiedene Radgrößen und außerdem den modularen Austausch von abgenutzten Auffahrfingern, was besonders effizient und kostengünstig bezogen auf die Lebensdauer der gesamten Vorrichtung ist. Dank der Profilierung weist die Auffahrhilfe überdies besondere sicherheitsrelevante Merkmale auf. Die Profilierung erhöht beim Auffahren insbesondere den Grip von Rädern, während die dabei durch die bspw. Räder druckbelasteten Unterseiten der Auffahrfinger ein Verrutschen verhindern. Gegenüber bekannten Auffahrtselementen weist sich die erfindungsgemäße Auffahrhilfe als vorteilhaft aus.

Die Auffahrfinger können z.B. aus einem metallischen Werkstoff, insbesondere Stahl, Alu, Titan o.ä. gefertigt sein. Die Auffahrfinger können für sich genommen jeweils einstückig ausgebildet sein. Die Auffahrfinger können bspw. gießend urgeformt sein, gesintert werden, oder aus einem oder mehreren Stücken des gewünschten Werkstoffs umgeformt werden. Es ist ferner möglich, die Auffahrfinger aus einem hochfesten Kunststoff zu erzeugen.

Es kann vorteilhaft sein, eine Ausgestaltung der Unterseiten der Auffahrfinger vorzusehen, welche ein Verrutschen noch effektiver verhindert. Gemäß einer bevorzugten Ausführungsform weisen die Auffahrfinger daher jeweils im Bereich der Unterseite zumindest ein Sicherungselement auf. Die Sicherungselemente können dabei bspw. derart ausgebildet sein, dass eine Belastung der Auffahrfinger zu einer rutschhemmenden Verkeilung mit einem bspw. Untergrund o.ä. führt.

Ist eine Auffahrhilfe an einer beispielhaft zu befahrenden Vorrichtung angeordnet, so kann diese insbesondere gegenüber einer Ebene bzw. einem Boden, Terminalflur o.ä. auf welchem die besagte Vorrichtung angeordnet ist winklig ausgerichtet sein. So kann eine Höhendifferenz über eine Weglänge hinweg linear überwunden werden. Beim Auffahren auf die Auffahrhilfe mit einem bspw. Fahrzeug werden dadurch jedoch insbesondere anteilig Kräfte auf die Auffahrhilfe und schließlich auf die zu befahrende Vorrichtung in Fahrtrichtung ausgeübt, was zum Verschieben oder Verrutschen der vorgenannten Vorrichtung führen kann. Das ist insbesondere auch ein sicherheitstechnisches Problem, da die bevorzugten zum Auffahren vorgesehenen Fahrzeuge wie LKW, Sattelauflieger usw. sehr schwer sind und entsprechend hohe Kräfte beim Auffahren freigesetzt werden können. Gemäß einer weiteren bevorzugten Ausführungsform sind die Sicherungselemente daher als Vorsprung an der Unterseite der jeweiligen Auffahrfinger ausgebildet. Der Vorsprung bildet gegenüber einem wie vorgenannt bspw. Boden, Terminalflur o.ä. insbesondere eine Verkeilung, so dass die entsprechende zu befahrende Vorrichtung noch besser am Verrutschen gehindert wird. Die Wirkung dieser bspw. Verkeilung kann sich dabei insbesondere durch das Gewicht des aufzufahrenden Fahrzeugs erhöhen, so dass ein schwereres Fahrzeug entsprechend eine stärke Verkeilung verursachen kann. Der Vorsprung wirkt bei Belastung insbesondere selbstsichernd.

Der Vorsprung kann bspw. zahnartig ausgebildet sein, wie der Zahn eines Zahnrads. Bei Belastung kann sich der Zahn dann im bspw. Boden verkeilen. Es ist aber auch möglich, dass der Vorsprung nasenartig ausgebildet ist, wobei dieser dann insbesondere eine abgerundete Spitze aufweisen kann. Der Vorsprung kann bspw. über die gesamte Breite des jeweiligen Auffahrfingers also in der vorgenannten Querrichtung verlaufen. Es ist ebenfalls denkbar, dass bspw. nebeneinander in Quer- und/oder Längsrichtung gesehen mehrere einzelne Vorsprünge an der Unterseite der jeweiligen Auffahrfinger vorgesehen sind.

Zur Weiterbildung des modularen, austauschbaren Gedankens einzelner oder gruppierter Auffahrfinger kann es vorteilhaft sein, wenn diese unabhängig von anderen weiteren Auffahrfingern bzw. Gruppen davon austauschbar ausgebildet sind. Gemäß einer bevorzugten Ausführungsform sind die Auffahrfinger daher jeweils an eigenem Lagerelement drehbar gelagert. Es ist dabei denkbar, dass wie vorgenannt mehrere Gruppen von Auffahrfingern vorgesehen sind, welche jeweils entsprechend gruppiert gemeinsam an einem Lagerelement drehbar gelagert ausgebildet sind.

Es ist also bspw. vorstellbar, dass ein mit einem Lagerelement verbundener Auffahrfinger über das ihm zugeordnete Lagerelement mit einer zu befahrenen Vorrichtung, bspw. eine Transportplattform, Bühne o.ä. verbunden wird. Dazu kann das Lagerelement bspw. lösbar durch Verschraubung, Klemmung oder Aufstecken auf ein korrespondierendes Verbindungselement oder unlösbar bspw. durch Schweißen, Löten, Kleben oder Sintern an einer entsprechenden zu befahrenden Vorrichtung angeordnet werden.

Die geometrische Drehachse des Lagerelements kann bevorzugt quer zur Längserstreckung der Auffahrfinger in einer Querrichtung verlaufen, so dass sich die Finger insbesondere entsprechend in einer dazu korrespondierenden Längsrichtung erstrecken. Die Längserstreckung der Auffahrfinger kann vorzugsweise im Gebrauch bzw. bei Anordnung an einer wie vorgenannt zu befahrenden Vorrichtung gleich derjenigen Fahrtrichtung sein, in welcher ein bspw. LKW und/oder Sattelauflieger auf die entsprechende Vorrichtung auffahren würde.

Es kann weiter aus Gründen der Effizienz und Einfachheit vorteilhaft sein, wenn die einzelnen Auffahrfinger mit geringem Aufwand an einer zu befahrenden Vorrichtung angeordnet werden können. Gemäß einer weiteren bevorzugten Ausführungsform sind daher alle Auffahrfinger über ihren Verbindungsabschnitt mit einem einzigen Lagerelement verbunden. Wie vorgenannt kann die Anordnung der Auffahrfinger an einer zu befahrenden Vorrichtung vorzugsweise über die lösbare und unlösbare Befestigung der Lagerelemente bzw. des Lagerelements an der entsprechenden Vorrichtung erfolgen. Es können somit neben Material insbesondere Mittel und Aufwand zur Befestigung eingespart werden, wenn die Auffahrfinger bereits über ein einziges Lagerelement anordbar sind.

Um einen möglichst flexiblen Einsatz der Auffahrfinger zu gewährleisten, insbesondere hinsichtlich der belastungsmäßigen Anpassbarkeit der Auffahrfinger an verschiedene Radgrößen, kann es weiter vorteilhaft sein, wenn die Auffahrfinger an dem einzigen Lagerelement jeweils für sich frei beweglich ausgebildet sind. Gemäß einer weiteren bevorzugten Ausführungsform sind die Auffahrfinger daher unabhängig voneinander drehbar an dem Lagerelement gelagert. So ist es bspw. möglich, dass bei Belastung der Auffahrhilfe durch verschiedene Radbreiten nur auf einen Teil der vorgesehenen Auffahrfinger ein Belastungsmoment ausgeübt wird.

Es kann weiter vorteilhaft sein, die Freiheitsgrade Auffahrfinger auf die Drehbarkeit zu reduzieren, insbesondere um den Abstand der Auffahrfinger und deren funktionale Unabhängigkeit voneinander zu wahren. Gemäß einer weiteren bevorzugten Ausführungsform sind die Auffahrfinger daher mittels Abstandhalter voneinander separiert an dem Lagerelement gelagert.

Als Abstandhalter können bspw. Trennstücke aus einem weichen und/oder elastischen Werkstoff vorgesehen sein, die zwischen den einzelnen Auffahrfingern angeordnet sind und die Auffahrfinger ggf. auch gegen Verrutschen insbesondere in der vorgenannten Querrichtung sichern. Als Werkstoff könnten insbesondere Kunststoffe wie Gummi, Hartgummi, oder ein Schaumstoff in Frage kommen. Diese können jedoch hinsichtlich der ggf. hohen Gewichts- und Reibungsbelastung durch etwaiges Auffahren derart unter Abrasion leiden, dass Wartungsintervalle der Auffahrhilfe erhöht würden. Es ist daher ebenfalls denkbar, dass die Abstandhalter aus demselben oder einem ähnlich festen Werkstoff wie die Auffahrfinger ausgebildet sind und die Auffahrfinger dadurch baulich, mechanisch voneinander separiert werden. So können die Auffahrfinger wie vorgenannt bspw. aus einem Stahl gefertigt sein und ebenso dann auch die Abstandhalter. Die Abstandhalter können bspw. mit dem Lagerelement verbunden sein, so dass weiterhin eine Befestigung nur des Lagerelements an einer zu befahrenden Vorrichtung zur Befestigung der Auffahrhilfe genügen kann. Es ist ebenfalls denkbar, dass zumindest ein Teil der Abstandhalter an der zu befahrenden Vorrichtung in entsprechender Weise befestigt wird und das Lagerelement mit den Auffahrfingern wiederum an den Abstandhaltern befestigt wird.

Weiter ist es möglich, dass die Abstandhalter einen Abschnitt aufweisen, welcher jeweils analog oder ähnlich zu den Verbindungsabschnitten der Auffahrfinger ausgebildet ist. So können die Abstandhalter bspw. in einer Weise mit dem Lagerelement verbunden sein, die der Verbindungsweise der Auffahrfinger mit dem Lagerelement entspricht.

Es ist dabei wie vorgenannt möglich, dass die Abstandhalter insbesondere im Gebrauch in Kontakt mit Rädern von Fahrzeugen kommen, die mittels der Auffahrhilfe auf eine zu befahrende Vorrichtung auffahren sollen. Entsprechend kann es vorteilhaft sein, wenn auch die Abstandhalter in einer Weise ausgestaltet sind, welche das Auffahren begünstigen. Gemäß einer weiteren bevorzugten Ausführungsform weisen die Abstandhalter daher eine profilierte Oberfläche auf. Die Profilierung der Abstandhalter kann dabei analog insbesondere einen Beitrag zum erhöhten Grip von Rädern von Fahrzeugen leisten, welche zur Auffahrt auf eine zu befahrende Vorrichtung vorgesehen sind. Die Profilierung der Auffahrfinger, sowie ggf. die Profilierung der Abstandhalter kann daher auch bspw. reibungsvergrößernd wirken. Die Art der Profilierung kann vorzugsweise gleich der Profilierung der Auffahrfinger sein. Es ist aber ebenfalls möglich, eine anders ausgestaltete Profilierung einer Oberfläche der Abstandhalter im Gegensatz zu den Auffahrfingern vorzusehen. Es ist ebenfalls denkbar, dass die Ausrichtung der Profilierung an den Abstandhaltern in eine Richtung gerichtet ist, die ungleich der Ausrichtung der Profilierung der Auffahrfinger ist.

Um eine einfache, sichere und effiziente Verbindung der Auffahrfinger mit dem einen oder mehreren Lagerelementen zu realisieren kann es weiter vorteilhaft sein, eine Verbindungsart zu wählen, welche geringer Wartungsintervalle bedarf und darüber hinaus besonders stabil ist. Gemäß einer weiteren bevorzugten Ausführungsform weisen die Auffahrfinger daher eine Ausnehmung in ihrem Verbindungsabschnitt auf, und das Lagerelement ist als Achse ausgebildet, welche durch die Ausnehmung geführt ist. Die Achse kann dabei vorzugsweise zylindrisch ausgebildet sein. Die Achse kann weiter bevorzugt aus einem Werkstoff nach denselben Vorgaben wie Auffahrfinger und/oder Abstandhalter gefertigt sein. Die Achse kann sich an der Auffahrhilfe insbesondere in der Querrichtung, also insbesondere quer zur Längserstreckung der Auffahrfinger erstrecken, so dass die Achse die Drehbarkeit um eine geometrische Achse ermöglicht, welche wie vorgenannt bevorzugt in der Querrichtung ausgerichtet ist.

Die Auffahrfinger können damit mit ihrer Ausnehmung auf die Achse aufgeschoben werden, so dass die Auffahrfinger im Wesentlichen formschlüssig auf der Achse aufsitzen. Sind Abstandhalter wie vorgenannt vorgesehen, so können auch die Abstandhalter derart mit einer Ausnehmung versehen sein, dass auch diese auf die Achse aufgeschoben werden können. Es ist dabei bspw. denkbar, dass abwechselnd jeweils ein Abstandhalter gefolgt von einem Auffahrfinger auf die Achse aufgeschoben sind. Ebenfalls ist es denkbar, dass zwischen zwei auf die Achse aufgeschobenen Abstandhalter eine Mehrzahl an Auffahrfingern entsprechend angeordnet sind und diese Mehrzahl an Auffahrfingern dann zumindest mittelbar zusammenwirken.

Um eine Drehbarkeit der Auffahrfinger um die Achse in möglichst einfacher und wartungsarmer Art und Weise zu realisieren kann vorzugsweise ein Schmiermittel im Kontaktbereich der Ausnehmung im Verbindungsabschnitt der Auffahrfinger mit der Achse vorgesehen werden. Die Abstandhalter hingegen können auch bspw. gegen Drehung gesichert sein, auch wenn die Achse durch eine bspw. Ausnehmung der Abstandhalter hindurchgeführt ist. Die Abstandhalter können bspw. an einem Grundelement der Auffahrhilfe, bspw. eine Grundplatte festgelegt sein, wobei die Auffahrhilfe dann über das Grundelement an einer zu befahrenden Vorrichtung befestigt wird. Ebenfalls ist es aber denkbar, dass ein oder mehrere der Abstandhalter direkt an der zu befahrenden Vorrichtung lösbar oder unlösbar wie vorgenannt festgelegt werden und die Achse bzw. entsprechend die Auffahrfinger nicht weiter mit der zu befahrenden Vorrichtungen verbunden sein müssen.

Sind die bspw. Achse und die Auffahrfinger nur über die Abstandhalter befestigt, so ist es weiter möglich, dass die ansonsten freie Achse gegen Verschiebung gesichert wird. Dabei kann die insbesondere zylindrisch ausgebildete Achse zumindest auf einer Seite endseitig eine Bohrung aufweisen, durch welche in Sicherungsstift geführt werden kann. Der Sicherungsstift kann dann derart dimensioniert sein, dass die Achse nicht mehr durch die Ausnehmungen von Auffahrfingern und/oder ggf. Abstandhalter gezogen werden kann. Die Achse kann daher bevorzugt durch einen in einer endseitigen Bohrung angeordneten Sicherungsstift gegen eine Verschiebung in Querrichtung gesichert sein. Eine solche Verschiebung könnte ansonsten bereits im Gebrauch durch Belastung, Vibrationen o.ä. geschehen, so dass die Achse insbesondere auch gegen eine ungewollte Selbstlösung gesichert wird.

Schließlich ist es denkbar, dass mehrere einzelne Achsen als Lagerelement vorgesehen sind und die Auffahrfinger bspw. einzeln oder insbesondere auch in Gruppen an einzelnen Achsen angeordnet sind. Die einzelnen Achsen können dann wiederum wie vorgenannt bspw. über zugeordnete Abstandhalter, über ein Grundelement oder direkt mit der zu befahrenden Vorrichtung verbunden sein.

Die grundlegenden Anforderungen an die Profilierung der Auffahrfinger bzw. ferner ggf. der Abstandhalter wurden vorangehend bereits dargelegt. Weiter kann es jedoch besonders vorteilhaft sein, eine Profilierung vorzusehen, welche zwar einerseits den Grip von Rädern erhöht bzw. reibungsvergrößernd wirkt, andererseits aber auch besonders schonend gegenüber Rädern ist, also diese nicht beschädigt. Gemäß einer weiteren bevorzugten Ausführungsform weisen die Oberseite der Auffahrfinger jeweils als Profilierung mehrere querverlaufende, abgerundete Erhebungen auf. Der Verlauf der Erhebungen kann dabei bevorzugt über die gesamte Breite der Auffahrfinger verlaufen, wobei als Breite hier entsprechend die Ausdehnung der Oberseite quer zur Längserstreckung der Auffahrfinger angesehen werden kann. Die Erhebungen können bspw. auf die Länge der Auffahrfinger gesehen in regelmäßigem Abstand voneinander angeordnet sein. Es ist ebenfalls denkbar, dass die Erhebungen unregelmäßig angeordnet sind. Der Grip der Räder auf den Auffahrfingern kann aber jedoch bspw. gerade wegen der Beabstandung der Erhebungen und den damit verbundenen lokalen Höhengradienten begünstigt sein. Liegen die Erhebungen zu nah zusammen, ist es denkbar, dass diese gegenüber einem Rad wie eine zusammenhängende Fläche wirken.

Die Erhebungen können bevorzugt gleichartig auf den Auffahrfingern angeordnet sein. Es ist aber ferner denkbar, dass die Erhebungen derart über die in einer Auffahrhilfe nebeneinanderliegenden Auffahrfinger verteilt sind, dass diese ein bevorzugtes Muster ergeben. Es ist denkbar, dass die Erhebungen auf den Auffahrfingern in einer Draufsicht auf die Auffahrhilfe bspw. V-förmig ausgestaltet sind.

Es kann weiter vorteilhaft sein, wenn die Auffahrfinger an einem von der zu befahrenden Vorrichtung und damit dem Lagerelement abgewandten Ende in einer Höhe schlanker ausgebildet sind, als im Bereich des Lagerelements. Dadurch kann das Auffahren weiter erleichtert werden. Gemäß einer weiteren bevorzugten Ausführungsform ist der Verbindungsabschnitt daher an einem ersten Ende der Auffahrfinger angeordnet, und die Auffahrfinger verjüngen sich entlang ihrer Länge in Richtung eines zweiten Endes. Das zweite Ende ist entsprechend bevorzugt das Ende eines Auffahrfingers, welches zuerst Kontakt mit einem bspw. Rad eines aufzufahrenden Fahrzeugs hat. Das bspw. Rad eines Fahrzeugs passiert demnach die Auffahrfinger insbesondere vom zweiten Ende über die Länge bis zum ersten Ende. Das zweite Ende kann entsprechend auch bspw. als derjenige Teil eines Auffahrfingers angesehen werden, welcher Kontakt mit dem wie vorgenannt bspw. Boden oder Terminalflur hat. Die Auffahrfinger sind entsprechend bevorzugt im Bereich des ersten Endes mit dem Lagerelement verbunden. Es ist möglich, dass die Auffahrfinger im Bereich des zweiten Endes spitz zulaufend ausgebildet sind, wobei die Spitze dann vorzugsweise abgerundet ausgebildet ist.

Um das Auffahren weiter zu erleichtern und sicherer zu machen, kann es weiter vorteilhaft sein, wenn die Auffahrfinger oberseitig eine Ausformung aufweisen, welche ein ungewolltes Rutschen von wie vorgenannten Rädern unterbinden kann. Gemäß einer weiteren bevorzugten Ausführungsform weisen die Auffahrfinger daher im Bereich des zweiten Endes oberseitig eine Auffahrfläche auf, welche in Richtung des ersten Endes jeweils winklig in eine Ablagefläche übergeht. Vom zweiten Ende aus gesehen kann die Auffahrfläche dabei z.B. gegenüber einem Boden oder Terminalflur vorzugsweise steiler ausgebildet sein als die Ablagefläche. Demnach hat ein bspw. Rad eines aufzufahrenden Fahrzeugs nach der initialen Auffahrt auf die Auffahrhilfe im Rahmen der Ablagefläche eine Abstützung gegen ein unbeabsichtigtes Herunterrutschen.

Dabei ist es weiter möglich, dass ein bspw. an der Unterseite von Auffahrfingern angeordnetes Sicherungselement, welches bspw. wie vorgenannt als Vorsprung an der Unterseite eines Auffahrfingers ausgebildet sein kann, über die Länge des Auffahrfingers gesehen in einem Bereich angeordnet ist, welcher unterhalb der Ablagefläche liegt. Die in dem Zusammenhang flachere Ausbildung der Ablagefläche kann dann bspw. den wie vorgenannt selbstsichernden Effekt des Sicherungselements über das Gewicht des aufzufahrenden Fahrzeugs begünstigen. Dank der flacheren Ausgestaltung der Ablagefläche ist dann nämlich insbesondere der in Richtung des bspw. Sicherungselements gerichtete Kraftanteil größer, als bei einer steileren Ausgestaltung. Sind bspw. keine Sicherungselemente an den Unterseiten der Auffahrfinger vorgesehen, so kann die Ausrichtung der Ablageflächen analog den Druck durch das wie vorgenannte Gewicht eines Fahrzeugs o.ä. derart gerichtet auf die Unterseiten übertragen, dass der Reibungswiderstand der Unterseiten gegenüber einem bspw. Untergrund vorteilhaft erhöht wird und ein Verrutschen ebenfalls noch besser vermieden wird.

Gemäß einer weiteren bevorzugten Ausführungsform sind die Auffahrfinger weiter im Bereich des zweiten Endes oberseitig eben ausgebildet. Darunter kann bspw. verstanden werden, dass im Bereich des zweiten Endes keine Profilierung vorgesehen ist, bspw. um die wie vorgenannt initiale Auffahrt die Auffahrhilfe weiter zu begünstigen. Der dabei eben ausgebildete Bereich kann vorzugsweise auf die Auffahrfläche und/oder die Ablagefläche begrenzt sein.

Beim Passieren der Auffahrhilfe kann es wie vorgenannt vorteilhaft sein, wenn die auf Ecken, Kanten bzw. spitz zulaufende Bereiche verzichtet wird, um das Material selbst und insbesondere auch etwaige Räder von aufzufahrenden Fahrzeugen zu schonen. Gemäß einer weiteren bevorzugten Ausführungsform sind daher die Oberseiten der Auffahrfinger im Bereich der Verbindungsabschnitte jeweils abgerundet ausgebildet. Sind Abstandhalter vorgesehen, welche nach Art und Weise wie vorgenannt auch aus einem entsprechenden Werkstoff gefertigt sind und möglicherweise ebenfalls Verbindungsabschnitte aufweisen, kann es ebenfalls vorteilhaft sein, wenn die Abstandhalter auf einer Oberseite ebenfalls abgerundet ausgebildet sind. Dies kann insbesondere dann der Fall sein, wenn die Abstandhalter wie vorgenannt auf einer Oberseite ebenfalls profiliert sind.

Die Erfindung betrifft weiter eine Verladeplattform aufweisend zumindest eine Auffahrhilfe, wobei insbesondere für die Ausgestaltung, Anordnung und Möglichkeiten dieser Auffahrhilfen auf die vorangehenden Definitionen und Erklärungen zurückgegriffen werden kann.

Die erfindungsgemäße Verladeplattform ist geeignet zum Umschlag von Sattelaufliegern im kombinierten Verkehr. Darunter kann im Rahmen der Erfindung verstanden werden, dass mit Hilfe der Verladeplattform insbesondere nicht-kranbare Sattelauflieger von der Straße kommend auf Schienenfahrzeuge und/oder Schiffe verladen werden können.

Die erfindungsgemäße Verladeplattform weist einen Eingangsbereich auf. Der Eingangsbereich kann im Rahmen der Erfindung als derjenige Bereich verstanden werden, durch welchen ein bspw. Lastkraftwagen, Sattelzug o.ä. mit einem Sattelauflieger auf die Verladeplattform auffährt. Am Eingangsbereich ist bei der erfindungsgemäßen Verladeplattform zumindest eine Auffahrhilfe angeordnet.

Die erfindungsgemäße Verladeplattform hat insbesondere den Vorteil, dass diese dank der Auffahrfinger der Auffahrhilfen beim Auffahren von Sattelaufliegern nicht verrutscht. Gleichzeitig ist mit den Fingern eine flexible Sicherung für die Räder des Sattelaufliegers gegeben, so dass verschiedenartige Sattelauflieger mit unterschiedlichen Radgrößen sicher, einfach und effizient aufgefahren und umgeschlagen werden können. Überdies können die drehbar gelagerten Auffahrfinger auch insbesondere beim initialen Auffahren auf die Verladeplattform dafür sorgen, dass sich diese am dem Eingangsbereich entgegengesetzten Ende nicht aufbäumt. Die Auffahrfinger können insbesondere verhindern, dass die beim Auffahren auf den Eingangsbereich der Verladeplattform einwirkenden hohen Gewichtskräfte zu einer hebelmäßigen Anhebung eines entgegengesetzten Endes der Verladeplattform führt. Die Auffahrfinger sichern die Verladeplattform beim Auffahren insbesondere gegen Verrutschen und Aufbäumen.

Ist ein Sattelauflieger auf der Verladeplattform bereits erfolgreich abgestellt worden, so kann die Verladeplattform insbesondere Greifkanten aufweisen, an welchen die Verladeplattform mitsamt Sattelauflieger bspw. gekrant, also angehoben werden kann. Beim Anheben der Verladeplattform können die sich Auffahrfinger dank der drehbaren Lagerung mit definierbarem Spielraum absenken, so dass die daran angelehnten Räder ohne manuelle Maßnahmen gegen Abrutschen gesichert sind.

Wird die angehobene Verladeplattform dann in einem bspw. Taschenwagen eines Schienenfahrzeugs abgelegt, können die Auffahrfinger durch den Kontakt mit dem Wagenboden wieder nach oben rotiert werden, so dass diese nicht auf die Ladungshöhe auftragen. Dies ermöglicht dann insbesondere, dass die Räder je nach weiterer Ausgestaltung der Verladeplattform trotz der Auffahrfinger selbst Kontakt mit ihren Laufflächen zu dem Wagenboden herstellen können. Dazu kann die Verladeplattform bspw. durchgehende Radmulden und einen mittig entlang ihrer Länge angeordneten Mitteltunnel aufweisen, so dass der Sattelauflieger selbst auf dem Wagenboden aufstehen kann und ebenfalls nicht die Ladungshöhe beeinflusst.

Dazu weist die Verladeplattform gemäß einer bevorzugten Ausführungsform im Eingangsbereich zumindest in zwei Abschnitten Auffahrfinger auf, welche in einer Querrichtung quer zur Länge der Auffahrfinger in einem Radabstand voneinander beabstandet angeordnet sind. Dies hat den Vorteil, dass jeder Spur des aufzufahrenden Sattelaufliegers eigene Auffahrfinger zugeordnet sind.

Die vorgenannten Mechanismen und Vorteile der erfindungsgemäßen Verladeplattform können auch erreicht werden, wenn eine beispielhafte Trag- oder Verladeplattform in entsprechender Weise mit zumindest einer erfindungsgemäßen Auffahrhilfe ausgerüstet ist.

Details der Erfindungen werden nachfolgend anhand von Ausführungsbeispielen mit Bezug auf Figuren erläutert. Diese Figuren zeigen:
- Fig. 1a: eine perspektivische Ansicht zweier Auffahrhilfen gemäß einer Ausführungsform an einer Verladeplattform;
- Fig. 1b: eine perspektivische Nahsicht einer Auffahrhilfe aus Fig. 1a;
- Fig. 1c: eine Seitenansicht der Verladeplattform mit zwei Auffahrhilfen aus Fig. 1a;
- Fig. 1d: eine ausschnittsweise Nahsicht einer Auffahrhilfe aus Fig. 1a;
- Fig. 2a: eine perspektivische Ansicht eines einzelnen Auffahrfingers;
- Fig. 2b: eine perspektivische Ansicht eines einzelnen Abstandhalters.

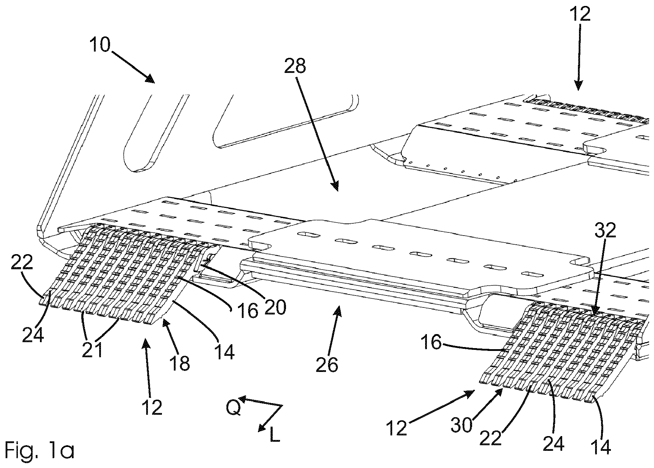

Fig. 1a illustriert beispielhaft eine Verladeplattform 10 in einem Eingangsbereich, welcher für die Auffahrt eines dort nicht dargestellten Lastkraftwagens mit Sattelauflieger ausgebildet ist. In dem Eingangsbereich sind zwei in einer Querrichtung Q voneinander beabstandet angeordnete Auffahrhilfen 12 angeordnet. Der Abstand der Auffahrhilfen 12 fällt im Wesentlichen mit einer Spurbreite des vorbezeichneten Sattelzugs zusammen.

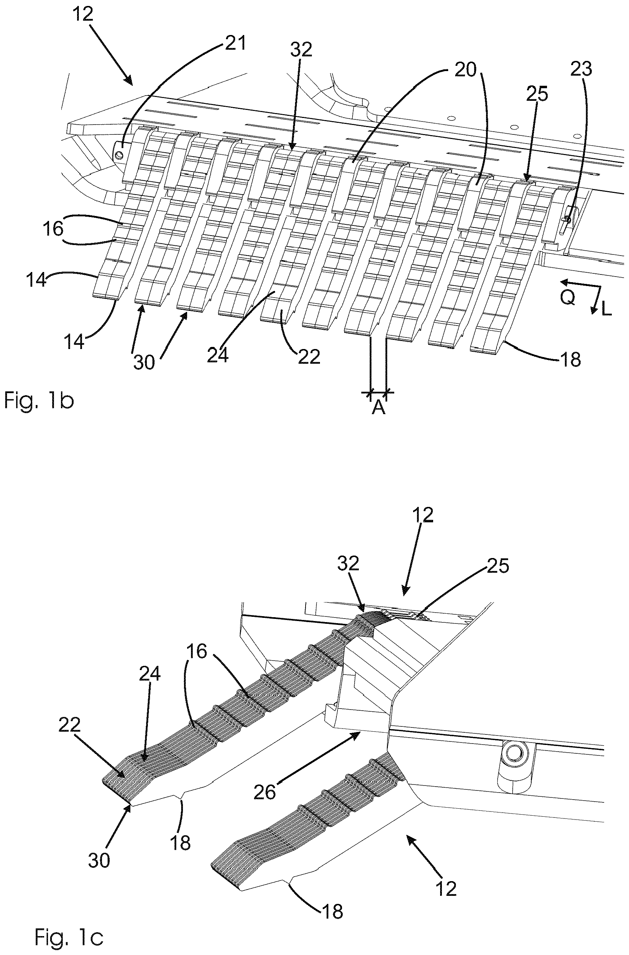

Wie aus der Nahsicht in Fig. 1b überdies ersichtlich ist, bestehen die Auffahrhilfen 12 hier jeweils aus 20 Auffahrfingern 14, wobei diese jeweils paarweise zusammengeschlossen und mittels Abstandhaltern 20 paarweise voneinander separiert angeordnet sind. Die Auffahrfinger 14 sind drehbar auf einer Achse 21 angeordnet, welche entsprechend zugleich eine geometrische Drehachse D darstellt. Die Paare an Auffahrfingern 14 sind hier beispielhaft querverbunden, so dass diese auch nur paarweise um die Achse 21 rotieren können.

Fig. 1b zeigt weiter, dass auf Oberseiten der Auffahrfinger 14 Haftungselemente 16 ausgebildet sind. Die Haftungselemente 16 sind als runde buckelartige Ausformungen ausgebildet, welche in regelmäßigem Abstand auf der Oberseite eines jeden Auffahrfingers 14 verteilt ausgebildet sind. Die Haftungselemente 16 stellen dabei hier einen integralen Bestandteil der Auffahrfinger 14 dar. Es ist in anderen Ausführungsformen zumindest denkbar, dass die Haftungselemente 16 nachträglich auf die Oberseite der Auffahrfinger 14 aufgebracht werden.

Es ist aus den Fig. 1a, 1b weiter ersichtlich, dass die Auffahrfinger 14 hier eine beispielhaft ebene Unterseite aufweisen, welche in einem unteren Bereich nur durch einen Vorsprung 18 unterbrochen wird. Der Vorsprung 18 ist hier zahnartig spitz ausgebildet. Die Vorsprünge 18 verlaufen in Querrichtung Q über die volle Unterseite der Auffahrfinger 14.

Im Bereich eines zweiten Endes 30 weisen die Auffahrfinger 14 weiter auf ihren Oberseiten jeweils eine Auffahrfläche 22 und darauffolgend eine flach abgewinkelte Ablagefläche 24 auf. Das zweite Ende 30 der Auffahrfinger 14 ist hier abgerundet ausgebildet.

Fig. 1c illustriert in einer Seitenansicht, dass die Haftungselemente 16 jeweils auf der Oberseite in Querrichtung Q durchgehend ausgebildet und, hier beispielhaft an jedem Auffahrfinger 14 im selben Bereich angeordnet sind. Die Haftungselemente 16 sind überdies oben abgerundet ausgebildet. Fig. 1c illustriert weiter die wie vorgenannt winklige Anordnung der Auffahrfläche 22 und der Ablagefläche 24.

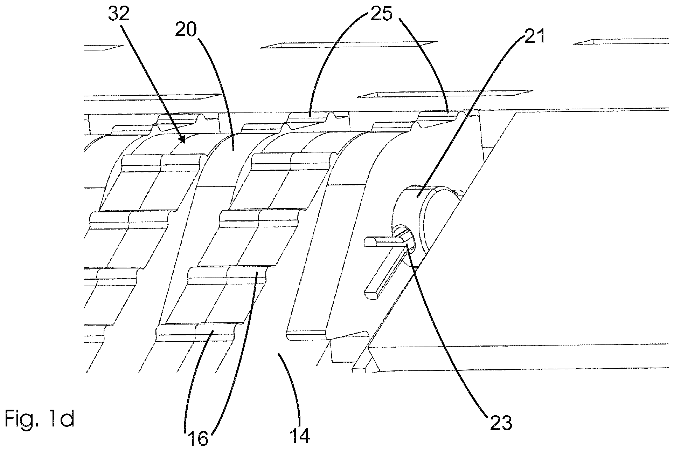

Aus Fig. 1c und überdies Fig. 1d wird schließlich noch deutlich, dass die Auffahrfinger 14 im Bereich eines ersten Endes einen nach oben ebenfalls abgerundet ausgebildeten Verbindungsabschnitt 32 aufweisen. Durch den Verbindungsabschnitt 32 verläuft, was hier nicht im Detail dargestellt ist, die Achse 21. Die Achse 21 ist endseitig mit einer Bohrung versehen, durch welchen ein selbstsichernder Sicherungsstift 23 gesteckt ist. Damit sind Achse 21, Auffahrfinger 14 und Abstandhalter 20 hier relativ zueinander gegen Verrutschen gesichert.

Insbesondere in Fig. 1d wird ferner illustriert, dass die Abstandhalter 20 auf ihren Oberseiten abgerundete Erhebungen 25 aufweisen. Diese sind analog zu den Haftungselementen 16 zur Verbesserung von Grip, also Haftungseigenschaften von Rädern von aufzufahrenden LKW, Sattelaufliegern oder anderen Fahrzeugen vorgesehen. Es wird ferner deutlich, dass die Abstandhalter 20 endseitig in Querrichtung Q gesehen, die Anordnung der Auffahrfinger 14 begrenzt und absichert, so dass die jeweils letzten Abstandhalter 14 einen Anschlag für die Sicherungsstifte 23 bilden.

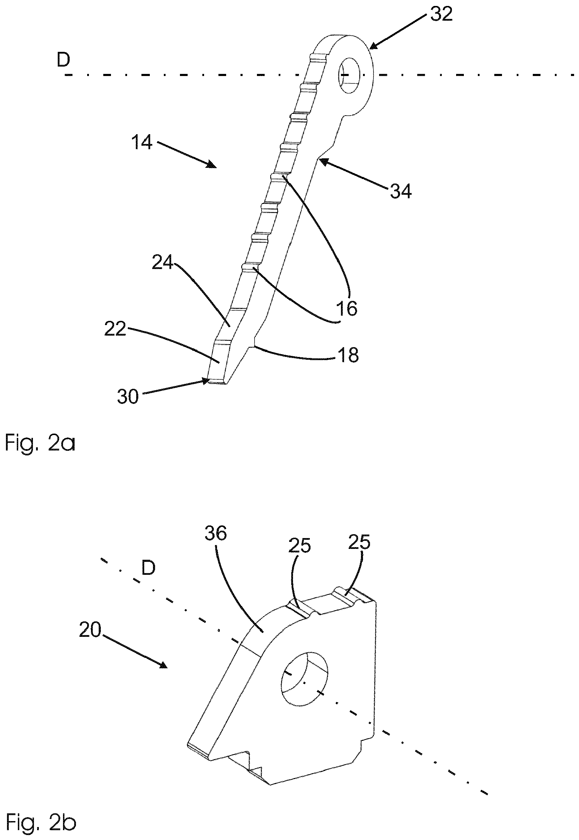

Eine mögliche Ausgestaltung eines einzelnen Auffahrfingers 14 wird in Fig. 2a illustriert. Hier wird deutlich, dass die Auffahrfinger 14 eine Ausnehmung in Form einer Bohrung am Verbindungsabschnitt 32 aufweisen, durch welche dann die hier nicht mehr dargestellte Achse 21 geführt werden kann. Die Achse 21 stellt dann eine haptische Form der in Fig. 2a illustrierten geometrischen Drehachse D dar. Es wird ferner beispielhaft gezeigt, wie sich die Auffahrfinger 14 in einer Seitenansicht ausgehend vom Verbindungsabschnitt 32 zum zweiten Ende 30 hin verjüngen können. Hier fällt insbesondere die Auskehlung 34 ins Auge, wobei dieser Anteil ein Durchhängen der Auffahrfinger 14 im Falle des Anhebens bspw. begrenzt. Der zwischen Auskehlung 34 und Verbindungsabschnitt 32 angeordnete noch etwas dickere Teil der Auffahrfinger 14 kann dabei als Anschlag gegenüber einer hier nicht dargestellten Grundplatte der bspw. Verladeplattform 10 angesehen werden. Ist dieser Teil vor der Auskehlung 34 dünner ausgebildet, so kann der entsprechende Auffahrfinger 14 insbesondere beim Anheben der Verladeplattform 10 weiter nach unten absinken. Dabei ist es beachtenswert, dass wie vorgenannt der Grad des Absinkens der Auffahrfinger 14 im Hebevorgang einen sicherheitsrelevanten Einfluss auf die Sicherung der Räder des bspw. Sattelaufliegers haben kann.

Fig. 2b illustriert schließlich beispielhaft eine mögliche Ausgestaltung eines Abstandhalters. 20 Dieser weist ebenfalls eine Ausnehmung in Form einer Bohrung auf, welche hier kongruent zur Ausnehmung im Verbindungsabschnitt 32 der Auffahrfinger 14 angesehen werden kann. Die Abstandhalter 20 weist hier weiter eine oberseitige Abrundung 36 auf, welche ebenfalls im Wesentlichen kongruent zur oberseitig runden Ausgestaltung des Verbindungsabschnitts 32 der Auffahrfinger 14 ausgebildet ist. Die beiden genannten runden Abschnitte (Abrundung 36 und Verbindungsabschnitt 32) können im Gebrauchszustand bei einer Auffahrhilfe 12 (vgl. Fig. 1d) axial zueinander ausgerichtet sein.

Aus Fig. 1a ist weiter bzgl. der Verladeplattform 10 ersichtlich, dass diese einen Mitteltunnel 26 und Radmulden 28 aufweist. Es ist entsprechend möglich, dass ein mit einer solchen Verladeplattform 10 in einem hier nicht näher dargestellten Taschenwagen abgestellter Sattelauflieger, mit seiner eigenen Bereifung am Wagenboden abgestützt sein kann. Die drehbare Lagerung der Auffahrfinger 14 begünstigt nämlich, dass diese beim Ablegen nach oben schwenken und somit den Raum freigeben, dass sich die Verladeplattform 10 mit dem Mitteltunnel 26 auf einer Mittelschiene des vorbezeichneten Taschenwagens ablegen kann. Die Auffahrhilfe 12 kann sich demnach selbst derart verschwenken, dass sie nicht in nachteiliger Weise zur Höhe der Ladung auf dem Taschenwagen beiträgt.

### Bezugszeichenliste

- 10: Verladeplattform
- 12: Auffahrhilfe
- 14: Auffahrfinger
- 16: Haftungselement
- 18: Vorsprung
- 20: Abstandhalter
- 21: Achse
- 22: Auffahrfläche
- 23: Sicherungsstift
- 24: Ablagefläche
- 25: Erhebung
- 26: Mitteltunnel
- 28: Radmulde
- 30: zweites Ende
- 32: Verbindungsabschnitt/Erstes Ende
- 34: Auskehlung
- 36: Abrundung
- A: Abstand
- D: Drehachse
- Q: Querrichtung
- L: Längsrichtung

## Patentansprüche

1. Auffahrhilfe, mit
- einer Mehrzahl länglich ausgebildeter Auffahrfinger, welche jeweils eine Oberseite und eine Unterseite, sowie einen Verbindungsabschnitt aufweisen, über den die Auffahrfinger an einem Lagerelement drehbar gelagert sind, wobei
- die Oberseiten der Auffahrfinger profiliert ausgebildet sind.

2. Auffahrhilfe nach Anspruch 1, **dadurch gekennzeichnet, dass** die Auffahrfinger jeweils im Bereich der Unterseite zumindest ein Sicherungselement aufweisen.

3. Auffahrhilfe nach Anspruch 2, **dadurch gekennzeichnet, dass** die Sicherungselemente als Vorsprung an der Unterseite der jeweiligen Auffahrfinger ausgebildet sind.

4. Auffahrhilfe nach einem der Ansprüche 1-3, **dadurch gekennzeichnet, dass** die Auffahrfinger jeweils an einem eigenen Lagerelement drehbar gelagert sind.

5. Auffahrhilfe nach einem der Ansprüche 1-3, **dadurch gekennzeichnet, dass** alle Auffahrfinger über ihren Verbindungsabschnitt mit einem einzigen Lagerelement verbunden sind.

6. Auffahrfinger nach Anspruch 5, **dadurch gekennzeichnet, dass** die Auffahrfinger unabhängig voneinander drehbar an dem Lagerelement gelagert sind.

7. Auffahrhilfe nach einem der Ansprüche 5 oder 6, **dadurch gekennzeichnet, dass** die Auffahrfinger mittels Abstandhalter voneinander separiert an dem Lagerelement gelagert sind.

8. Auffahrhilfe nach Anspruch 7, **dadurch gekennzeichnet, dass** die Abstandhalter eine profilierte Oberfläche aufweisen.

9. Auffahrhilfe nach einem der vorangehenden Ansprüche, **dadurch gekennzeichnet, dass** Auffahrfinger eine Ausnehmung in ihrem Verbindungsabschnitt aufweisen und das Lagerelement als Achse ausgebildet ist, welche durch die Ausnehmung geführt ist.

10. Auffahrhilfe nach einem der vorangehenden Ansprüche, **dadurch gekennzeichnet, dass** die Oberseite der Auffahrfinger jeweils als Profilierung mehrere querverlaufende abgerundete Erhebungen aufweisen.

11. Auffahrhilfe nach einem der vorangehenden Ansprüche, **dadurch gekennzeichnet, dass** der Verbindungsabschnitt an einem ersten Ende der Auffahrfinger angeordnet ist, und sich die Auffahrfinger entlang ihrer Länge in Richtung eines zweiten Endes verjüngen.

12. Auffahrhilfe nach Anspruch 11, **dadurch gekennzeichnet, dass** die Auffahrfinger im Bereich des zweiten Endes oberseitig eine Auffahrfläche aufweisen, welche in Richtung des ersten Endes jeweils winklig in eine Ablagefläche übergeht.

13. Auffahrhilfe nach einem der Ansprüche 11 oder 12, **dadurch gekennzeichnet, dass** die Auffahrfinger im Bereich des zweiten Endes oberseitig eben ausgebildet sind.

14. Auffahrhilfe nach einem der vorangehenden Ansprüche, **dadurch gekennzeichnet, dass** die Oberseiten der Auffahrfinger im Bereich der Verbindungsabschnitte jeweils abgerundet ausgebildet sind.

15. Verladeplattform zum Umschlag von Sattelaufliegern im kombinierten Verkehr, aufweisend einen Eingangsbereich mit zumindest einer Auffahrhilfe, insbesondere nach einem der Ansprüche 1-14.

16. Verladeplattform nach Anspruch 15, **dadurch gekennzeichnet, dass** im Eingangsbereich zumindest in zwei Abschnitten Auffahrhilfen vorgesehen sind, welche in einer Querrichtung quer zur Länge der Auffahrfinger in einem Radabstand voneinander beabstandet angeordnet sind.
